Europäisches Patentamt

European Patent Office

Office européen des brevets

(19)

(11) **EP 0 468 499 B1**

(12) **EUROPEAN PATENT SPECIFICATION**

(45) Date of publication and mention
of the grant of the patent:
**13.03.1996 Bulletin 1996/11**

(51) Int Cl.⁶: **H02P 5/40**, H02P 7/62,
G01L 3/24

(21) Application number: **91112506.0**

(22) Date of filing: **25.07.1991**

(54) **Measurement and control device particularly for asynchronous electric motors.**

Mess- und Steuereinrichtung, insbesondere für elektrische Induktionsmotoren

Dispositif de mesure et de contrôle, en particulier pour moteurs électriques asynchrones

(84) Designated Contracting States:
**AT BE CH DE DK ES FR GB GR IT LI LU NL SE**

(30) Priority: **27.07.1990 IT 2110990**

(43) Date of publication of application:
**29.01.1992 Bulletin 1992/05**

(73) Proprietor: **CENTRO STUDI AUTOMAZIONE
S.R.L.**
**I-20154 Milano (IT)**

(72) Inventor: **Montessori, Giuseppe**
**I-20154 MILANO (IT)**

(74) Representative: **Modiano, Guido, Dr.-Ing. et al**
**Modiano & Associati S.r.l.**
**Via Meravigli, 16**
**I-20123 Milano (IT)**

(56) References cited:
**US-A- 4 484 126**

• **PATENT ABSTRACTS OF JAPAN vol. 010, no.
154 (P-463)4 June 1986**
• **CONFERENCE RECORD OF THE 1988 IEEE
INDUSTRY APPLICATIONS SOCIETY ANNUAL
MEETING 2 October 1987, PITTSBURGH,
PENNSYLVANIA pages 489 - 492 H.SHIERLING
'Fast and reliable commissioning of ac variable
speed drives by self-commissioning'**
• **PATENT ABSTRACTS OF JAPAN vol. 10, no. 16
(E-375)(2073) 22 January 1986**
• **PATENT ABSTRACTS OF JAPAN vol. 10, no. 16
(E-375)(2073) 22 January 1986**
• **PATENT ABSTRACTS OF JAPAN vol. 014, no.
216 (E-924)8 May 1990**
• **PATENT ABSTRACTS OF JAPAN vol. 013, no.
218 (E-761)22 May 1989**
• **PATENT ABSTRACTS OF JAPAN vol. 012, no.
017 (E-574)19 January 1988**
• **PATENT ABSTRACTS OF JAPAN vol. 9, no. 89
(E-309)(1812) 18 April 1985**
• **IEEE TRANSACTIONS ON INDUSTRIAL
ELECTRONICS vol. 37, no. 6, December 1990,
N.Y. USA pages 477 - 482 C.C.CHAN & AL. 'An
effective Method for Rotor Resistance
Identification for high-performance induction
motor vector control'**
• **PESC 88 IEEE POWER ELECTRONICS
SPECIALISTS CONFERENCE vol. 2, 11 April
1988, KYOTO, JP pages 885 - 892 N.TSUJI & AL.
'stability analysis of a csi-fed induction motor
with digital vector controller'**

## Description

The present invention relates to a measurement and control device particularly for asynchronous electric motors.

Nowadays, most of the electric motors used in the most disparate applications are constituted by caged asynchronous electric motors. For these asynchronous motors, the greatest technical problem is constituted by speed adjustment, in order to be able to compete on equal footing with direct-current motors.

By virtue of the increasingly expanding availability of integrated circuits, microprocessors and power transistors, it is currently possible to manufacture control inverters which allow a better and more precise control of the power which supplies the asynchronous electric motor.

The performance required of a controller for an asynchronous motor can be summarized as follows: first of all a high maximum torque, at least equal to three or four times the nominal torque of the motor, both during startup and at running speed; a rapid pickup, which means a good ratio between the maximum torque and the inertia of the motor; a fairly good precision, i.e. a high gradient of the output characteristic of torque and speed variation; an overspeed, at constant power, equal to at least three or four times the basic speed of the asynchronous motor.

A solution to the described technical problem entails the use of open- or closed-loop inverters, for which there are problems in the uniformity of the driving of the motor if high torques or high response speeds for changes in load or in required speed are required.

In order to solve these problems, which are particularly onerous especially in an industrial environment, complicated controllers, often termed vector controllers, have been produced. Said controllers are usually based on circuits which detect and calculate the vectors which represent the current and the magnetic flux respectively.

The current and magnetic flux vectors have an angular rotation rate in the air gap of the motor which is equal to the one which corresponds to the power supply frequency, and generate the mechanical torques which maintain the motion of the rotor, furthermore entailing a relative slip speed of the magnetic flux vector with respect to the rotor, which rotates at the mechanical speed of the shaft, accelerating it or overcoming its useful load.

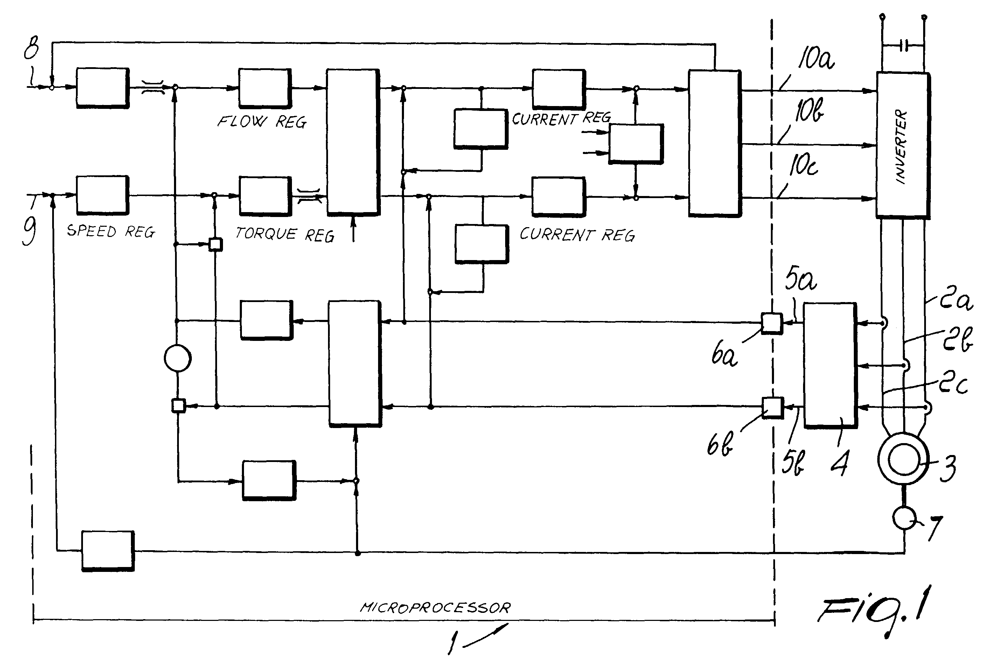

Such devices (figure 1) are usually based on a feedback microprocessor-based system which is complicated and expensive to manufacture, since the calculations necessary to obtain the modulus and the phase of the magnetic flux and torque vectors entail the solving of complicated matrix operations which, as is known, require a considerable expenditure of computing power of the microprocessor installed in these vector controllers, and vector controllers therefore usually require high-quality microprocessors, always having a considerable volatile memory capacity and containing application programs stored permanently in non-volatile memories; these last characteristics are not typical of ordinary microprocessors, but only of special microprocessors which usually have high costs. The design and sizing of the peripheral electronic components of the microprocessor must furthermore be particularly accurate, since the vector controller must operate in environments which are usually affected by considerable electromagnetic noise which thus usually negatively affects the electronic components placed in such environments.

Document JP-A-61008640 describes a device as defined in the preamble of claim 1.

The aim of the present invention is to eliminate or substantially reduce the disadvantages described above in known types of inverters with open- or closed-loop vector controllers by providing a measurement and control device particularly for asynchronous electric motors which eliminates the use of microprocessors while maintaining the accuracy of closed-circuit control, when applied.

Within the scope of the above aim, an object of the present invention is to provide a measurement and control device which does not require complicated matrix operations in order to obtain the information required for the correct control of the asynchronous electric motor.

Not least object of the present invention is to provide a measurement and control device which is relatively easy to manufacture and at very competitive costs.

This aim, these objects and others which will become apparent hereinafter are achieved by a measurement and control device particularly for asynchronous electric motors, comprising a multiplier/divider circuit having a first input for detecting the voltage supplied to an inverter for supplying power to an electric motor, a second input for detecting the current absorbed by said electric motor, and a third input terminal for detecting the operating angular frequency of said electric motor, said multiplier divider circuit being adapted to generate a calculated value representing the instantaneous mechanical torque of said electric motor, characterized in that it comprises means for calculating the instantaneous flux of said electric motor adapted to calculate an instantaneous value of said flux by taking the square root the result of a division between said calculated value representing the mechanical torque and a calculated value of the slip frequency of said electric motor, the output of said means for calculating the instantaneous flux being connected to first comparison means adapted to generate a signal representing the difference between said calculated value of said instantaneous flux and a reference value of said flux, said difference signal being sent to a flux regulator adapted to generate a power supply voltage of said electric motor which is transmitted to said inverter.

Further characteristics and advantages of the invention will become apparent from the description of a preferred but not exclusive embodiment of a measurement and control device particularly for asynchronous electric motors according to the invention, illustrated only by way of non-limitative example in the accompanying drawings, wherein:

figure 1 is an exemplifying diagram of a known microprocessor-based vector controller;

figure 2 is an exemplifying diagram of an asynchronous motor powered by means of an inverter; and

figures 3A, 3B and 3C are diagrams of embodiments of a measurement and control device particularly for asynchronous electric motors according to the invention.

With reference to figure 1, an example of a known vector controller comprises a microprocessor, generally indicated by the reference numeral 1, which receives, from the three supply phases 2a, 2b and 2c of an asynchronous motor 3, data prepared by a converter 4, which converts the three phases into only two measurement signals 5a and 5b. Said signals are converted from analog signals into digital signals by means of analog/digital converters 6a and 6b. Information on the frequency of the asynchronous motor 3 also reaches the microprocessor 1 by means of a transducer 7. Inside the microprocessor 1, the measured data are compared with the data defined by the user, which are indicated by the reference numerals 8 and 9. The outputs 10a, 10b and 10c are transmitted by the microprocessor 1 to an inverter 11 to adjust the power supplied to the asynchronous motor 3.

As is evident even from this summary description and from what has been stated, a vector controller requires a complicated hardware and software design in order to perform the necessary comparisons. From a merely constructive point of view, it furthermore requires particular precautions in order to avoid electromagnetic interference which can alter, sometimes quite significantly, the operation of said vector controller.

The mechanical torque provided by an asynchronous motor is given, as is known, by the scalar product of the magnetic flux and electric current vectors. Control of the mechanical torque C therefore requires control of the product:

$$C = \Phi \cdot I_q = I_d \cdot I_q$$

where [phi] indicates the magnetic flux vector and $I_q$ indicates the component of the electric current vector which is in quadrature with [phi]. The second equality is true, since the flux [phi] is proportional to $I_d$, minus any constants. $I_d$ and $I_q$ are mutually in quadrature and correspond to the excitation and armature currents of a direct-current motor. Normally, it is necessary to operate so that the flux [phi] (or rather the current $I_d$) is maximum and constant, as occurs in a direct-current motor. This allows one to have a preset mechanical torque C with the minimum value of the active component $I_q$ and thus to use the motor to the maximum.

The flux vector [phi] must have, with respect to the rotor, such a relative or slip velocity $W_s$ that the active component $I_q$ has the value necessary to achieve what has been described, i.e.:

$$I_q = W_s \cdot \Phi / R,$$

where $W_s$ indicates the slip frequency and R indicates the electric resistance of the rotor circuit.

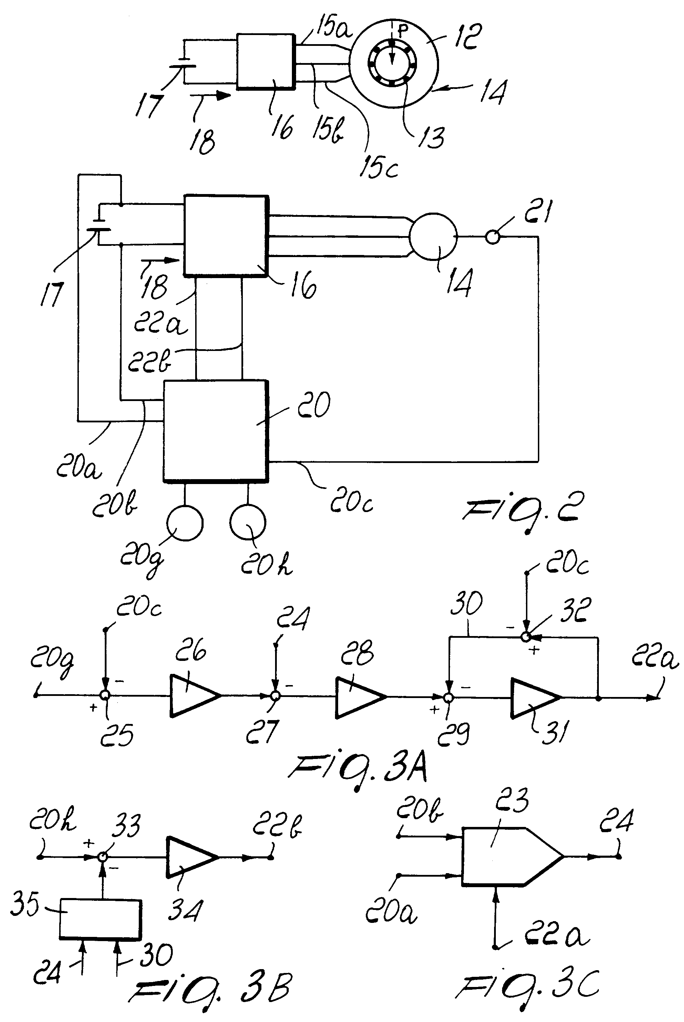

With reference to figure 2, asynchronous motor theory states that the electric power P transmitted by the stator 12 to the rotor 13 of an asynchronous electric motor 14 corresponds to the product of the mechanical torque C and of the operating angular frequency W, i.e.:

$$P = C \cdot W$$

The electric power P, however, is equal to the active power absorbed by the asynchronous electric motor 14 at the terminals 15a, 15b and 15c for input to the asynchronous electric motor 14 itself, minus the usually small losses in the stator 12 of said asynchronous electric motor 14. However, if the asynchronous electric motor 14 is powered by means of an inverter 16, which is in turn powered by a direct voltage or rather by a generator, indicated by the reference numeral 17, of a constant voltage E, the electric power P is the power absorbed continuously, i.e. the product of the supply voltage E 17 and of the absorbed current $I_{CC}$, indicated by the reference numeral 18, i.e.:

$$P = E \cdot I_{CC} = C \cdot W$$

from which one finds that the mechanical torque C is directly proportional to the electric power P, i.e.:

$$C = E \cdot I_{CC} / W.$$

From what has been stated above, the following expressions can be found:

$$C = I_d \cdot I_q \text{ (minus any constants)}$$

$$I_q = I_d \cdot W_s.$$

The following system is obtained from the preceding expressions:

$$I_d = ((E \cdot I_{CC})/(W \cdot W_s))^{1/2} = (C/W_s)^{1/2}$$

$$I_q = I_d \cdot W_s.$$

The final system shows that the values of the module of $I_q$ and $I_d$, which are required for the vector control of an asynchronous motor, can be obtained directly from the calculation of the mechanical torque C, performed starting from the values of the supply voltage E, of the absorbed current $I_{CC}$ and of the operating frequency W. If the calculated value of the slip frequency $W_s$ is necessary, it is determined from:

$$W_s = I_q / I_d,$$

where

$$I_d = (I_s^2 - I_q^2)^{1/2},$$

where $I_s$ is the overall value of the current absorbed by the three power supply phases 15a, 15b and 15c of the asynchronous electric motor 14, which can be obtained, by way of example, by means of three current transformers, one for each power supply phase 15a, 15b and 15c of said asynchronous electric motor 14.

The operating values of the asynchronous motor have thus been obtained theoretically. A measurement and control device particularly for asynchronous electric motors according to the invention, a schematic example of which is provided in figures 3A, 3B and 3C, has been developed from these values.

The measurement and control device according to the invention, indicated by the reference numeral 20, is thus reached by the supply voltage E 17 and by the absorbed current $I_{CC}$ 18 by means of input terminals 20a and 20b, as well as by the instantaneous angular frequency Wist of the asynchronous electric motor 14, which is detected by means of a transducer 21 and reaches the circuit 20 by means of an input terminal 20c. The speed required of the asynchronous electric motor 14, translated into a reference operating frequency $W^R$, and the operating magnetic flux $[phi]^R$, or rather the reactive operating current $I_d^R$, are furthermore set on the input terminals 20g and 20h by the operator on selectors indicated by the same reference numerals. The power supply voltage V and the operating frequency W of the asynchronous electric motor 14 are transmitted from the output terminals 22a and 22b from the circuit 20 to the inverter 16.

The measurement and control device 20 comprises means (figure 3C) for calculating a signal which represents the instantaneous mechanical torque $C_{ist}$, constituted by a multiplier/divider circuit 23 which is provided with a first input terminal 20a, with a second input terminal 20b, respectively for the absorbed current $I_{CC}$ 18 and for the power supply voltage E 17, and with a third input terminal 22a for an electric signal which represents the operating angular frequency W of the asynchronous electric motor 14. The multiplier/divider circuit 23 calculates the relation:

$$C_{ist}=E^*I_{CC}/W$$

which is transmitted to a frequency regulating circuit (figure 3A) by means of the output terminal 24.

With reference to figure 3A, the frequency regulating circuit comprises a second comparison means 25, in which the signal which represents the instantaneous angular frequency $W_{ist}$ of the asynchronous electric motor 14, coming from the fifth input terminal 20c, is subtracted from the signal which represents the reference operating frequency $W^R$ coming from the fourth input terminal 20g.

The output from the second comparison means 25 constitutes the input for a speed regulator 26, which calculates either a signal which represents the mechanical operating torque $C^R$ or the operating current $I_q^R$; the relationship between these two values, which are mutually proportional, has been explained above.

The output of said speed regulator 26 constitutes the input for a third comparison means 27, in which the signal which represents the instantaneous mechanical torque $C_{ist}$ is subtracted from the signal which represents the mechanical operating torque $C^R$ (or the instantaneous current $I_{q,ist}$ is subtracted from the operating current $I_q^R$). The signal which represents the instantaneous mechanical torque $C_{ist}$ or the instantaneous current $I_{q,ist}$ comes from the sixth input terminal 24.

The output of the third comparison means 27 is the input of a current regulator 28 which, starting from the signal received as input, calculates the signal which represents the reference value of the slip frequency $W_s^R$.

The output of the current regulator 28 constitutes the input for a fourth comparison means 29, in which the signal which represents the actual calculated value of the slip frequency $W_s$, which comes from a seventh input terminal connected to a feedback branch 30 explained hereinafter, is subtracted from the signal which represents the reference value of the slip frequency $W_s^R$.

The output of the fourth comparison means 29 constitutes the input for a slip regulator 31, which calculates, starting from the input signal, the signal which represents the operating frequency W, which is transmitted to the inverter 16 by means of the output terminal 22a. The signal which represents the operating frequency W is furthermore sent to the feedback branch 30.

The feedback branch 30 comprises a fifth comparison means 32, in which the signal which represents the instantaneous frequency $W_{ist}$ which corresponds to the speed of the asynchronous electric motor 14, coming from the eighth input terminal 20c, is subtracted from the signal which represents the operating frequency W. The output signal of the fifth comparison means, which represents the calculated value of the slip frequency $W_s$, constitutes the subtrahend input of the fourth comparison means 29.

The voltage regulating circuit illustrated in figure 3B comprises a first comparison means 33, in which the signal which represents the instantaneous magnetic flux $[phi]_{ist}$ (or the instantaneous current $I_{ist}$), coming from the tenth input terminal constituted by the terminals 24 and 30, is subtracted from the signal which represents the required operating magnetic flux $[phi]^R$ (or from -the required operating current $I_d^R$) coming from the ninth input terminal 20h. The instantaneous magnetic flux $[phi]_{ist}$ (or the instantaneous current $I_{ist}$) is calculated by means of the previously described $(C/W_s)$ ½ which is calculated by calculating means 35. The output of the first comparison means 33 constitutes the input for a flux regulator 34, which calculates, starting from the signal received in input, the power supply voltage V to be transmitted to the inverter 16 by means of the output terminal 22b.

Thus, as explained in the theoretical introduction to the device according to the invention, said circuit processes, starting from measured values and from values preset by the operator, control signals for the inverter which supplies power to the asynchronous electric motor. Said scalar signals V and W regulate the power supply and the operating frequency of the asynchronous motor, and thus regulate vector values, eliminating the need for complicated matrix operations and for the use of microprocessors.

The device according to the invention is slightly slower than the vector controllers which are conventionally used, since its reaction time is typically ten milliseconds, against the millisecond of vector controllers. However, this increase in reaction time does not negatively affect the device according to the invention, since the reaction times currently required by machines provided with asynchronous electric motors are at least one order of magnitude higher than the reaction time of the closed-loop automatic circuit according to the invention.

In particular, the device according to the invention allows one to obtain high speeds by reducing the set operating flux [phi]$^R$ coming from the ninth input terminal 20h, so as to be able to operate at a higher frequency with a voltage equal to the maximum available value.

The invention thus conceived is susceptible to numerous modifications and variations, all of which are within the scope of the inventive concept. For example, the electronic components required to provide the various regulators can vary according to the intended implementations. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Measurement and control device particularly for asynchronous electric motors, comprising

   a multiplier/divider circuit (23) having a first input (20b) for receiving the voltage supplied to an inverter (16) for supplying power to an electric motor (14), a second input (20a) for receiving the current absorbed by said electric motor (14), and a third input terminal (22a) for receiving an operating angular frequency (w) of said electric motor (14) which is supplied to said inverter (16),
   said multiplier/divider circuit (23) being adapted to generate a calculated value representing the instantaneous mechanical torque ($C_{ist}$) of said electric motor (14), **characterized in that it comprises**
   means (35) for calculating the instantaneous flux of said electric motor adapted to calculate an instantaneous value of said flux by taking the square root of the result of a division between said calculated value representing the instantaneous mechanical torque ($C_{ist}$) and a calculated value of the slip frequency ($w_s$) of said electric motor,
   the output of said means for calculating the instantaneous flux being connected to first comparison means (33) adapted to generate a signal representing the difference between said calculated value of said instantaneous flux and a reference value of said flux, said difference signal being sent to a flux regulator (34) adapted to generate a power supply voltage (22b) of said electric motor (14) which is transmitted to said inverter (16).

2. Device, according to claim 1, characterized in that it comprises a transducer (21) adapted to detect an instantaneous angular frequency ($w_{ist}$) of said electric motor (14).

3. Device, according to claim 2, characterized in that it comprises second comparison means (25) connected with its output to an input of a speed regulator (26), the inputs of said second comparison means (25) being the detected instantaneous angular frequency ($w_{ist}$) and a reference operating frequency ($w_R$), the output of said speed regulator (26) being a signal representing the mechanical operating torque ($C_R$).

4. Device, according to claim 3, characterized in that it comprises third comparison means (27) adapted to compare said signal representing the mechanical operating torque ($C_R$) with said calculated value of said instantaneous mechanical torque ($C_{ist}$), the output of said third comparison means (27) being connected to a regulating circuit (28) adapted to generate a reference value of the slip frequency ($w_s{}^R$)

5. Device, according to claim 4, characterized in that it comprises fourth comparison means (29) adapted to compare said reference value of the slip frequency ($w_s{}^R$) with said calculated value ($w_s$) of said slip frequency, the output of said fourth comparison means (29) being connected to a slip regulator (31) adapted to generate said operating angular frequency (w) which is supplied to said inverter (16).

6. Device, according to claim 5, characterized in that it comprises fifth comparison means (32) adapted to compare said operating angular frequency (w) with said instantaneous angular frequency ($w_{ist}$) in order to generate said calculated value ($w_s$) of said slip frequency.

**Patentansprüche**

1. Meß- und Steuereinrichtung, insbesondere für Asynchronmotoren, enthaltend

   - eine Multiplizier-/Dividierschaltung (23) mit einem ersten Eingang (20b) zur Beaufschlagung mit der an einem Inverter (16) liegenden Spannung, um einen Elektromotor (14) zu speisen, einem zweiten Eingang (20a) zur Beaufschlagung mit dem vom Elektromotor (14) aufgenommenen Strom, und einem dritten Eingang (22a) zur Aufnahme einer Arbeitswinkelfrequenz (w) des Elektromotors (14), die dem Inverter (16) zugeführt wird,

   - wobei die Multiplizier-/Dividierschaltung (23) einen berechneten Wert erzeugt, der dem momentanen mechanischen Drehmoment ($C_{ist}$) des Elektromotors 14 entspricht, gekennzeichnet durch

   - Mittel (35) zur Berechnung des momentanen Kraftflusses des Elektromotores, um den momentanen Wert des Kraftflusses dadurch zu berechnen, daß die Quadratwurzel des Ergebnisses der Division zwischen dem berechneten Wert des momentanen mechanischen Drehmoments ($C_{ist}$) und des berechneten Werts der Schlupffrequenz ($w_S$) des Elektromotorsgezogen wird,

   - wobei der Ausgang der Mittel zur Berechnung des momentanen Kraftflusses mit ersten Vergleichsmitteln (33) verbunden ist, um ein Signal zu erzeugen, das der Differenz zwischen dem berechneten Wert des momentanen Kraftflusses und dem Referenzwert des Kraftflusses entspricht, wobei das Differenzsignal zu einem Kraftflußregulator (34) geschickt wird, um eine Speisespannung (22b) des Elektromotors (14) zu erzeugen, die zum Inverter (16) geführt wird.

2. Einrichtung nach Anspruch 1, dadurch gekennzeichnet, daß ein Umformer (21) vorgesehen ist, um eine momentane Winkelfrequenz ($w_{ist}$) des Elektromotors (14) zu erkennen.

3. Einrichtung nach Anspruch 2, dadurch gekennzeichnet, daß sie zweite Vergleichsmittel (25) aufweist, die mit ihrem Ausgang mit dem Eingang eines Geschwindigkeitsregulators (26) verbunden sind, wobei die Eingangssignale der zweiten Vergleichsmittel (25) die ermittelte momentane Winkelfrequenz ($w_{ist}$) und eine Referenzarbeitsfrequenz ($w_R$) sind und das Ausgangssignal des Geschwindigkeitsregulators (26) ein Signal ist, das dem mechanischen Arbeitsdrehmoment ($C_R$) entspricht.

4. Einrichtung nach Anspruch 3, dadurch gekennzeichnet, daß es dritte Vergleichsmittel (27) enthält, um das Signal entsprechend dem mechanischem Arbeitsdrehmoment ($C_R$) mit dem berechneten Wert des momentanen mechanischen Drehmoments ($C_{ist}$) zu vergleichen, wobei der Ausgang der dritten Vergleichsmittel (27) mit einer Regelschaltung (28) verbunden ist, um einen Referenzwert der Schlupffrequenz ($w_s^R$) zu erzeugen.

5. Einrichtung nach Anspruch 4, dadurch gekennzeichnet, daß sie vierte Vergleichsmittel (29) aufweist, um den Referenzwert der Schlupffrequenz ($w_s^R$) mit dem berechneten Wert ($w_s$) der Schlupffrequenz zu vergleichen, wobei der Ausgang der vierten Vergleichsmittel (29) mit einem Schlupfregulator (31) verbunden ist, um die Arbeitswinkelfrequenz (w) zu erzeugen, die dem Inverter (16) zugeführt wird.

6. Einrichtung nach Anspruch 5, dadurch gekennzeichnet, daß sie fünfte Vergleichsmittel (37) aufweist, um die Arbeitswinkelfrequenz (w) mit der momentanen Winkelfrequenz ($w_{ist}$) zu vergleichen, um den berechneten Wert ($w_s$) der Schlupffrequenz zu erzeugen.

**Revendications**

1. Dispositif de commande et de mesure, en particulier pour des moteurs électriques asynchrones, comprenant :

   - un circuit multiplicateur/diviseur (23) ayant une première entrée (20b) pour recevoir la tension fournie à un inverseur (16) pour alimenter en puissance un moteur électrique (14), une deuxième entrée (20a) pour recevoir le courant absorbé par ledit moteur électrique (14), et une troisième borne d'entrée (22a) pour recevoir une fréquence angulaire opératoire (w) dudit moteur électrique (14) qui est fournie audit inverseur (16),

   - ledit circuit multiplicateur/diviseur (23) étant adapté pour engendrer une valeur calculée représentant le couple mécanique instantané ($C_{ist}$) dudit moteur électrique (14), caractérisé en ce qu'il comprend :

   - des moyens (35) pour calculer le flux instantané dudit moteur électrique adaptés pour calculer une valeur instantanée dudit flux en formant la racine carrée du résultat d'une division entre ladite valeur calculée représentant le couple mécanique instantané ($C_{ist}$) et une valeur calculée de la fréquence de glissement ($w_s$) dudit moteur électrique,

   - la sortie desdits moyens pour calculer le flux instantané étant reliée à des premiers moyens de comparaison (33) adaptés pour engendrer un signal représentant la différence entre ladite valeur calculée dudit flux instantané et une valeur de référence dudit flux, ledit signal de différence étant envoyé à un régulateur de flux (34) adapté pour engendrer une tension d'alimentation en puissance (22b) dudit moteur électrique (14) qui est transmise audit inverseur (16).

2. Dispositif selon la revendication 1, caractérisé en ce qu'il comprend un transducteur (21) adapté pour détecter une fréquence angulaire instantanée ($w_{ist}$) dudit moteur électrique (14).

3. Dispositif selon la revendication 2, caractérisé en ce qu'il comprend des deuxièmes moyens de comparaison (25) reliés par leur sortie à une entrée d'un régulateur de vitesse (26), les entrées desdits seconds moyens de comparaison (25) étant la fréquence angulaire instantanée détectée ($w_{ist}$) et une fréquence opératoire de référence ($w_R$), la sortie dudit régulateur de vitesse (26) étant un signal représentant le couple opératoire mécanique ($C_R$).

4. Dispositif selon la revendication 3, caractérisé en ce qu'il comprend des troisièmes moyens de comparaison (27) adaptés pour comparer ledit signal représentant le couple opératoire mécanique ($C_R$) à ladite valeur calculée dudit couple mécanique instantané ($C_{ist}$), la sortie desdits troisièmes moyens de comparaison (27) étant reliée à un circuit de régulation (28) adapté pour engendrer une valeur de référence de la fréquence de glissement ($w_s{}^R$).

5. Dispositif selon la revendication 4, caractérisé en ce qu'il comprend des quatrièmes moyens de comparaison (29) adaptés pour comparer ladite valeur de référence de la fréquence de glissement ($w_s{}^R$) à ladite valeur calculée ($w_s$) de ladite fréquence de glissement, la sortie desdits quatrièmes moyens de comparaison (29) étant reliée à un régulateur de glissement (31) adapté pour engendrer ladite fréquence angulaire opératoire (w) qui est fournie audit inverseur (16).

6. Dispositif selon la revendication 5, caractérisé en ce qu'il comprend des cinquièmes moyens de comparaison (32) adaptés pour comparer ladite fréquence angulaire opératoire (w) à ladite fréquence angulaire instantanée ($w_{ist}$) de façon à engendrer ladite valeur calculée ($w_s$) de ladite fréquence de glissement.

Fig.1

Fig. 2

Fig. 3A

Fig. 3B

Fig. 3C